# EUROPÄISCHE PATENTSCHRIFT

(11) **EP 1 876 314 B1**
(45) Veröffentlichungstag und Bekanntmachung des Hinweises auf die Patenterteilung: **03.03.2010**
(21) Anmeldenummer: 07450117.2
(22) Anmeldetag: 02.07.2007
(51) Int. Cl.: E04F 13/08

(54) **Montageelement**
Mounting element
Elément de montage

(30) Priorität: 05.07.2006 AT 52506 U
(43) Veröffentlichungstag der Anmeldung: 09.01.2008
(73) Patentinhaber: Eternit-Werke Ludwig Hatschek Aktiengesellschaft, 4840 Vöcklabruck (AT)
(72) Erfinder: Atzwanger, Markus, 4844 Regau (AT); Hüttner, Harald, 4813 Altmünster (AT)
(74) Vertreter: Ellmeyer, Wolfgang

(56) Entgegenhaltungen:
- EP-A- 0 533 566
- DE-A1- 4 219 761
- GB-A- 1 151 861
- US-A- 3 675 881

## Beschreibung

Die Erfindung betrifft ein Montageelement für eine Befestigungslöcher aufweisende Fassadenplatte, wobei das Montageelement durch eine Ausgleichsbuchse gebildet ist, welche Ausgleichsbuchse einen Einsteckabschnitt umfasst, wobei die Ausgleichsbuchse ein Durchgangsloch für die im wesentliche spielfreie Aufnahme eines Befestigungselements aufweist, und die Ausgleichsbuchse aus einem elastischen Material gebildet ist, das die Relativbewegungen zwischen der Fassadenplatte und dem Befestigungselement durch Verformung aufnimmt.

Eine weit verbreitete Form der Verkleidung von Gebäuden besteht in der Anbringung von Fassadenplatten, die auf eine Unterkonstruktion, etwa aus Metall oder aus Holz geschraubt oder genietet werden. Sowohl die Fassadenplatten als auch die Unterkonstruktion unterliegen äußeren Einflüssen wie Feuchtigkeit und Temperatur, wodurch Längenänderungen hervorgerufen werden, die zu Spannungen im Bereich der Befestigungspunkte führen. Bei Faserzement-Fassadenplatten liegt z.B. ein signifikantes Quell- bzw. Schrumpfverhalten in Abhängigkeit von der Feuchtigkeit vor, welches bei der Montage der Fassadenplatten berücksichtigt werden muß.

Aus diesem Grund sind die Befestigungslöcher, durch welche hindurch die entsprechenden Befestigungselemente zum Verbinden mit der Unterkonstruktion geführt sind, mit beträchtlich größerem Durchmesser im Vergleich zum Durchmesser der Befestigungselemente ausgebildet. Als Folge davon werden Längenausdehnungen zwar ausgeglichen, die an der Wand angebrachten Fassadenplatten sind aber im Montagezustand gegenüber den Befestigungselementen mit einem erheblichen Spiel bewegbar. Maximal zwei der Befestigungslöcher haben einen etwas kleineren Durchmesser, um nicht starke Eigenbewegungen der Fassadenplatten zuzulassen. Dies kann dennoch zu kollektiven Bewegungen und Verschiebungen der Fassadenplatten führen, die das Erscheinungsbild der Fassade beeinträchtigen und zugleich die Gefahr von Beschädigungen in sich bergen. Weiters wird ein nicht zentriertes oder schräges Ansetzen des jeweiligen Befestigungselements ermöglicht, wodurch vom Montagepersonal relativ häufig geneigt aus der Fassadenplattenebene ragende Schrauben oder Nieten angebracht werden, die optisch unvorteilhaft aussehen und auch einen verminderten Ausdehnungsspielraum zulassen.

Zugleich können durch die groß dimensionierten Befestigungslöcher Verunreinigungen in Form von Staub und Sand, Regenwasser, Schnee, Schadstoffen sowie Ungeziefer etc. hinter die Fassadenplatten gelangen, wodurch sich über die Jahre Folgeschäden ausbilden können. Wasser dringt zudem bei Faserzementplatten im Bereich der Befestigungslöcher in das Plattenmaterial ein, wodurch sich sichtbare Flecken in Form eines feuchten Hofes rund um das Befestigungsloch und Ausblühungen an der Außenseite durch Salzablagerungen ergeben.

In GB 1 151 861 A ist ein Buchsenelement aus einem elastischen Material beschrieben, welches durch das Anziehen der Befestigungsschraube in das Loch des zu befestigenden Bauteils eingepresst wird.

In DE 42 19 761 A1 und US 3 675 881 A werden Buchsen offenbart, die durch das Anziehen der Befestigungsschraube gegen die Lochlaibung gepresst werden und so eine Fixierung des zu befestigenden Bauteils bewerkstelligt wird.

Aufgabe der Erfindung ist es, ein Montageelement anzugeben, welches eine schwingungsarme, elastische Befestigung von Fassadenplatten ermöglicht, die den Anforderungen eines Längenausdehnungsausgleiches durch umweltbedingte Einflüsse gerecht wird.

Weitere Aufgabe ist es, ein Montageelement anzugeben, welches die Befestigungslöcher vor einem Eindringen von Stoffen jeglicher Form schützt.

Ein weiteres Ziel der Erfindung besteht darin, eine zentrierte Befestigung der Befestigungselemente innerhalb der Befestigungslöcher zu erreichen

Dies wird erfindungsgemäß dadurch erreicht, daß der Einsteckabschnitt durch einen Hohlzylinderkörper gebildet ist, entlang dessen Außenumfang voneinander beabstandete, radial nach außen wegstehende und parallel zur Hohlzylinderachse verlaufende Stege angeformt sind, und daß der Hohlzylinderkörper an einem Ende einen flanschartigen Abschnitt aufweist, dessen Außendurchmesser mit dem freien Ende der radial wegstehenden Stege im wesentlichen fluchtend verläuft.

Durch die zwischen dem Befestigungselement und dem Befestigungsloch der Fassadenplatte anzubringende erfindungsgemäße Montageelement wird ein zentriertes Anbringen des Befestigungselements ermöglicht und zugleich eine elastische Lagerung gewährleistet, welche auch Längenveränderungen der Fassadenplatte oder der Unterkonstruktion auszugleichen in der Lage ist. Da alle Befestigungslöcher einer Fassadenplatte mit einem solchen erfindungsgemäßen Montageelement versehen sein können, bringt dies auch eine völlig gleichmäßige Gewichtsverteilung für alle Befestigungselemente mit sich.

In bevorzugter Weise kann das Montageelement gemäß einer Ausführungsform der Erfindung einstückig und aus einem elastischen Kunststoff gebildet sein. Auf diese Weise wird eine elastische Lagerung der Fassadenplatte auf der Unterkonstruktion sichergestellt.

Mittels der Stege ist die Zentrierung des Befestigungselements gegenüber dem Befestigungsloch gewährleistet und zugleich können bei Relativlängenänderungen zwischen Unterkonstruktion und der Fassadenplatte ausreichend große Bewegungen ausgeführt werden.

Der flanschartige Abschnitt ist vorzugsweise so ausgeführt, das er einen sicheren Sitz des erfindungsgemäßen Montageelements bewirkt.

Zusätzlich kann der flanschartige Abschnitt an seinem Ende einen kegelstumpfartigen Abschnitt aufweisen, um zu verhindern, daß das erfindungsgemäße Montageelement bei seiner Anbringung durch das Befestigungsloch hindurchgestoßen wird.

Um ein Eindringen von Wasser und Feuchtigkeit in das Befestigungsloch der Fassadenplatte zu unterbinden, kann in weiterer Ausbildung der Erfindung an den Einsteckabschnitt eine Dichtlippe angeformt sein, welche das Befestigungsloch der Fassadenplatte nach Anbringen des Befestigungselements gegenüber von außen eindringender Feuchtigkeit abdichtet.

Es kann die Dichtlippe dabei durch eine ringartige Querschnittserweiterung des flanschartigen Abschnitts gebildet sein, deren Außendurchmesser größer als der Durchmesser der Befestigungslöcher ist. Bei der Verankerung des Befestigungselements in der Unterkonstruktion drückt dieses gegen die Dichtlippe und dichtet somit das Befestigungsloch entlang seines gesamten Öffnungsumfangs gegenüber der Außenumgebung.

Damit auch das Eindringen von Flüssigkeit durch das Durchgangsloch des erfindungsgemäßen Montageelements vermeidbar ist, kann der flanschartige Abschnitt im Bereich der Durchgangslochöffnung eine in Richtung der Mittelachse vorstehende, kegelstumpfartige Auflagefläche aufweisen. Diese wird durch das Befestigungselement zusammengedrückt und dichtet somit das Durchgangsloch gegenüber der Außenumgebung ab.

Die Erfindung wird nachfolgend anhand der in den Zeichnungen gezeigten Ausführungsbeispiele eingehend erläutert. Es zeigt dabei
Fig. 1 zeigt eine Draufsicht auf die von der Fassadenoberfläche abgewandte Stirnfläche einer Ausführungsform des erfindungsgemäßen Montageelements;
Fig. 2 zeigt einen Schnitt AA durch die Ausführungsform gemäß Fig. 1;
Fig. 3 zeigt eine Draufsicht auf die von der Fassadenoberfläche abgewandte Stirnfläche einer weiteren Ausführungsform des erfindungsgemäßen Montageelements;
Fig. 4 zeigt einen Schnitt AA durch die Ausführungsform gemäß Fig. 3;
Fig. 5 zeigt einen Schrägriß der Ausführungsform gemäß Fig. 3;
Fig. 6 einen teilweisen Schnitt durch eine Fassadenplatte und ein Befestigungsloch mit einem Befestigungselement gemäß Stand der Technik;
Fig. 7 einen teilweisen Schnitt durch eine Fassadenplatte und ein Befestigungsloch mit einem Befestigungselement und einem Montageelement gemäß Fig. 1;
Fig. 8 einen teilweisen Schnitt durch eine Fassadenplatte und ein Befestigungsloch mit einem Befestigungselement und einem Montageelement gemäß Fig. 3;
Fig. 9 einen teilweisen Schnitt durch eine Fassadenplatte und ein Befestigungsloch mit einem Befestigungselement gemäß Stand der Technik;
Fig. 10 einen teilweisen Schnitt durch eine Fassadenplatte und ein Befestigungsloch mit einem Befestigungselement und einem Montageelement gemäß Fig. 1 und
Fig. 11 einen teilweisen Schnitt durch eine Fassadenplatte und ein Befestigungsloch mit einem Befestigungselement und einem Montageelement gemäß Fig. 3;

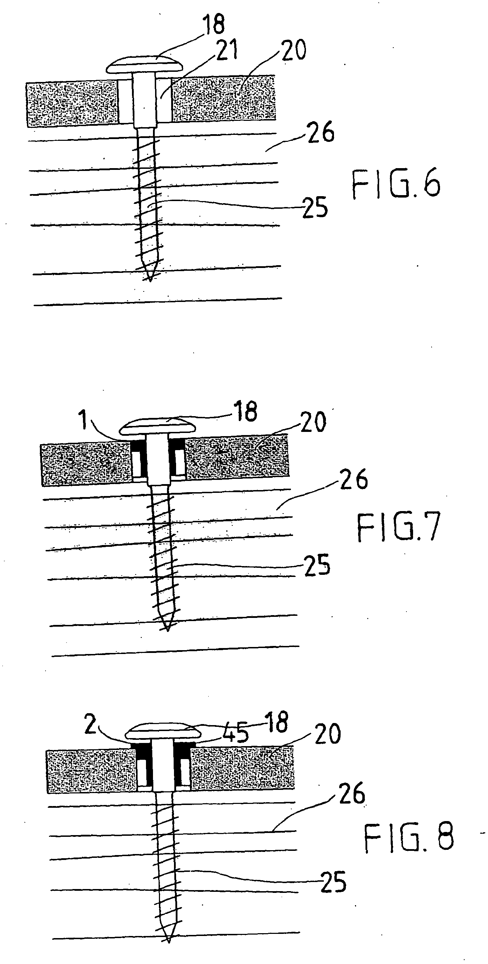

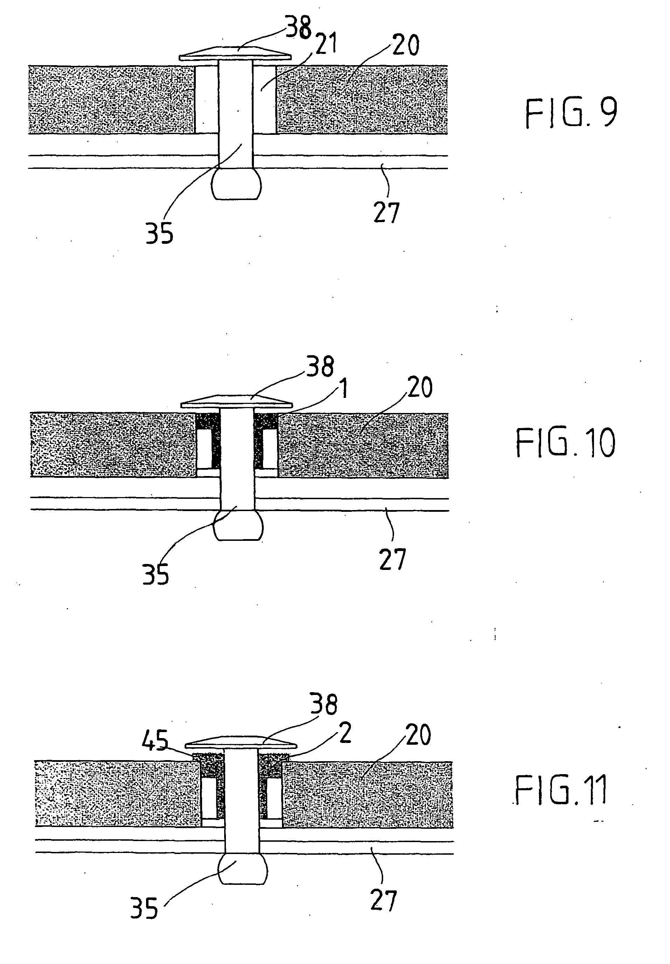

Fig. 6 und 9 zeigen gemäß Stand der Technik einen Bereich einer Fassadenplatte 20 mit einem Befestigungsloch 21, durch das als Befestigungselement eine Schraube 25 (Fig. 6) bzw. eine Niete 35 (Fig. 9) hindurchgeführt ist, die mit der jeweiligen Unterkonstruktion, einer Holz-Lattung 26 in Fig. 6 bzw. einem Metallgerüst 27 in Fig. 9 verbunden sind. Um die auftretenden Längenänderungen, deren Ursache sowohl die Unterkonstruktion 26, 27 als auch die Fassadenplatte 20 sein können, ohne Entstehen von mechanischen Spannungen zuzulassen, sind die Befestigungslöcher 21 so groß ausgeführt, daß genügend Platz für eine Vergrößerung oder eine Verkleinerung z.B. im Verlauf einer Schrumpfung oder einer Quellung einer Faserzement-Fassadenplatte verbleibt. Wie aus Fig. 6 und 9 zu erkennen ist, kann es, bedingt durch die Größe des Befestigungsloches 21 bei unpräziser Montage zu Schiefstellungen der Befestigungselemente 25, 35 kommen, die nachteilige Folgen für den Ausdehnungsspielraum haben können.

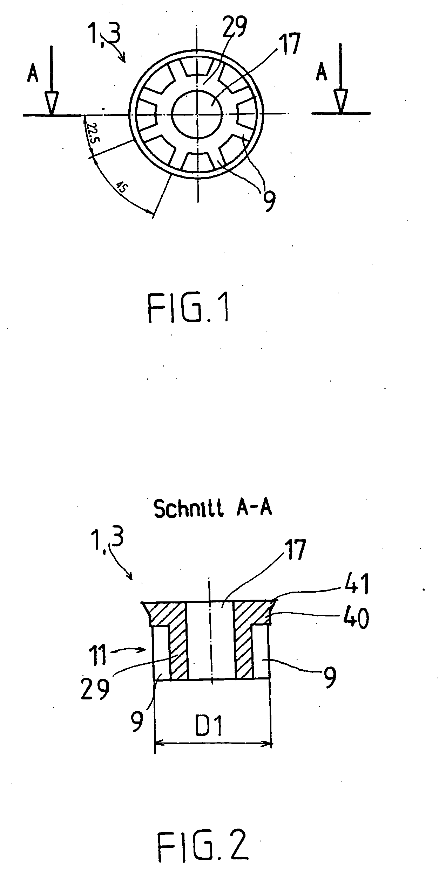

Fig. 1 und 2 zeigen ein erfindungsgemäßes Montageelement 1 zur Befestigung von Fassadenplatten mit Befestigungslöchern. Die Art der Fassadenplatte und die Anzahl der Befestigungslöcher, die in dieser Fassadenplatte angebracht sind, unterliegt im Rahmen der Erfindung keiner Beschränkung. Bevorzugt findet das erfindungsgemäße Montageelement 1 bei Faserzement-Fassadenplatten Anwendung, da bei diesen die Dimensionsschwankungen besonders stark auftreten, sodaß die Befestigungslöcher entsprechend großen Durchmesser aufweisen müssen.

Das erfindungsgemäße Montageelement 1 ist eine Ausgleichsbuchse 3, die einen Einsteckabschnitt 11 aufweist, dessen Außendurchmesser D1 im wesentlichen gleich dem Durchmesser der Befestigungslöcher ist. Zur spielfreien Aufnahme eines in Fig. 1 und Fig. 2 nicht dargestellten Befestigungselements, z.B. einer Schraube verfügt die Ausgleichsbuchse 3 über ein Durchgangsloch 17 und ist aus einem elastischen Material gebildet ist, das die Relativbewegungen zwischen der Fassadenplatte und dem Befestigungselement durch Verformung aufnimmt.

In den in den Fig. 1 bis 5 gezeigten Ausführungsbeispielen ist das erfindungsgemäße Montageelement 1, 2 bzw. die Ausgleichsbuchse 3 einstückig und aus einem elastischen Kunststoff, z.B. EPDM gebildet.

Es wird durch die Ausgleichsbuchse 3 aber auch eine zentrierte Führung des Befestigungselements in Bezug auf das umgebende Befestigungsloch gewährleistet, sodaß sich ein mittiger und senkrecht zur Fassadentafelebene stehender Verlauf ergibt (Fig. 7, 8, 10, 11).

In den in Fig. 1, 2 und Fig. 3, 4, 5 gezeigten Ausführungsbeispielen ist der Einsteckabschnitt durch einen Hohlzylinderkörper 29 gebildet, entlang dessen Außenumfang voneinander beabstandete, radial nach außen wegstehende und parallel zur Hohlzylinderachse verlaufende Stege 9 angeformt sind, die sternartig angeordnet und um jeweils 45° gegeneinander versetzt sind. Die Stege 9 sorgen einerseits für eine zentrische Beabstandung des Hohlzylinderkörpers 29 von der Innenwand der Befestigungslöcher und gewährleisten zugleich eine Verformbarkeit der Ausgleichsbuchse in allen Richtungen in der Ebene der Fassadenplatte für den Fall einer auftretenden Längenausdehnung oder - kontraktion.

In der Ausführungsform gemäß Fig. 1, 2 weist der Hohlzylinderkörper 29 an einem Ende einen flanschartigen Abschnitt 40 auf, dessen Außendurchmesser mit dem freien Ende der radial wegstehenden Stege 9 im wesentlichen fluchtend verläuft. Dieser Außendurchmesser kann so gewählt sein, daß der flanschartige Abschnitt 40 im Befestigungsloch einen festen Sitz aufweist, damit die Ausgleichsbuchse während des Montagevorganges nicht aus dem Befestigungsloch fallen kann. In diesem Zusammenhang ist vorgesehen, daß der flanschartige Abschnitt 40 an seinem Ende einen kegelstumpfartigen Abschnitt 41 aufweist, der die Ausgleichsbuchse daran hindert, durch das Befestigungsloch hindurch durchgestoßen zu werden.

Es wird beim Montagevorgang das erfindungsgemäße Montageelement 1 in das Befestigungsloch 21 gesteckt und sodann das Befestigungselement, nämlich die Schraube 25 durch das Durchgangsloch 17 des Hohlzylinderkörpers 29 geführt und dann in der Unterkonstruktion 26 verankert, wie beispielsweise in Fig. 7 gezeigt.

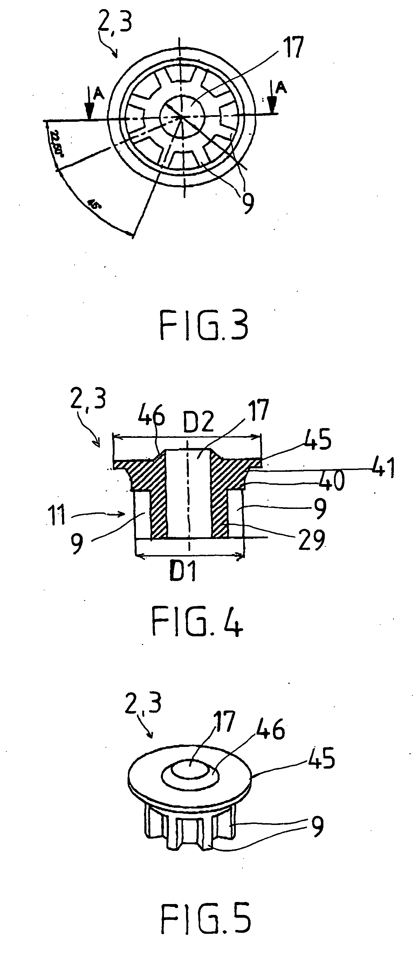

In der Ausführungsform gemäß Fig. 3, 4, 5 ist zusätzlich zum Hohlzylinderkörper 29 des erfindungsgemäßen Montageelements 2 eine Feuchtigkeitsdichtung in Form einer an den Einsteckabschnitt 11 angeformten Dichtlippe 45 ausgebildet, welche das Befestigungsloch der Fassadenplatte nach Anbringen des Befestigungselements gegenüber von außen eindringender Feuchtigkeit abdichtet.

Die Dichtlippe 45 ist durch eine ringartige Querschnittserweiterung des flanschartigen Abschnitts 40 gebildet, deren Außendurchmesser D2 größer als der Durchmesser der Befestigungslöcher ist, sodaß die Dichtlippe 45 bei der Montage auf der außenseitigen Fassadenplattenoberfläche aufliegt. Sobald das Befestigungselement 25, 35 in der Unterkonstruktion 26, 27 verankert wird, drückt dieses z.B mit seinem Schraubenkopf 18 (Fig. 8) oder z.B. mit seinem Nietkopf 38 (Fig. 11) gegen die Dichtlippe 45, wodurch ein dichtender Abschluß gegenüber der Fassadenplatte 20 ausgebildet wird.

Weiters weist der flanschartige Abschnitt 40 im Bereich der Durchgangslochöffnung eine in Richtung der Mittelachse vorstehende, kegelstumpfartige Auflagefläche 46 auf, die eine Abdichtung des Durchgangsloches 17 gegenüber der Außenumgebung bewirkt, sobald der Kopf 18, 38 des Befestigungselements 25, 35 satt aufliegt. Weitere konstruktive Variationen des erfindungsgemäßen Montageelements sind im Schutzumfang der Erfindung beinhaltet.

## Patentansprüche

1. Montageelement für eine Befestigungslöcher (21) aufweisende Fassadenplatte (20), wobei das Montageelement (1,2) durch eine Ausgleichsbuchse (3) gebildet ist, welche Ausgleichsbuchse (3) einen Einsteckabschnitt (11) umfasst, wobei die Ausgleichsbuchse (3) ein Durchgangsloch (17) für die im wesentliche spielfreie Aufnahme eines Befestigungselements (25, 35) aufweist, und die Ausgleichsbuchse (3) aus einem elastischen Material gebildet ist, das die Relativbewegungen zwischen der Fassadenplatte (20) und dem Befestigungselement (25, 35) durch Verformung aufnimmt, **dadurch gekennzeichnet, daß** der Einsteckabschnitt (11) durch einen Hohlzylinderkörper (29) gebildet ist, entlang dessen Außenumfang voneinander beabstandete, radial nach außen wegstehende und parallel zur Hohlzylinderachse verlaufende Stege (9) angeformt sind, und daß der Hohlzylinderkörper (29) an einem Ende einen flanschartigen Abschnitt (40) aufweist, dessen Außendurchmesser mit dem freien Ende der radial wegstehenden Stege (9) im wesentlichen fluchtend verläuft.

2. Montageelement nach Anspruch 1, **dadurch gekennzeichnet, daß** der flanschartige Abschnitt (40) an seinem Ende einen kegelstumpfartigen Abschnitt (41) aufweist.

3. Montageelement nach Anspruch 1 oder 2, **dadurch gekennzeichnet, daß** an den Einsteckabschnitt (11) eine Dichtlippe (45) angeformt ist, welche das Befestigungsloch (21) der Fassadenplatte (20) nach Anbringen des Befestigungselements (25, 25) gegenüber von außen eindringender Feuchtigkeit abdichtet.

4. Montageelement nach Anspruch 2 und 3, **dadurch gekennzeichnet, daß** die Dichtlippe (45) durch eine ringartige Querschnittserweiterung des flanschartigen Abschnitts (40) gebildet ist, deren Außendurchmesser (D2) größer als der Durchmesser der Befestigungslöcher (21) ist.

5. Montageelement nach Anspruch 3 oder 4, **dadurch gekennzeichnet, daß** der flanschartige Abschnitt (40) im Bereich der Durchgangslochöffnung (17) eine in Richtung der Mittelachse vorstehende, kegelstumpfartige Auflagefläche (46) aufweist.

6. Montageelement nach einem der vorhergehenden Ansprüche, **dadurch gekennzeichnet, daß** es einstückig und aus einem elastischen Kunststoff gebildet ist.

## Claims

1. A mounting element for a façade panel (20) with fixing holes (21), said mounting element (1, 2) being formed by a compensation bushing (3), said compensation bushing (3) including an insert portion (11), wherein said compensation bushing (3) has a through hole (17) for receiving a fixing element (25, 35) without play and is made of an elastic material absorbing the relative movement between said façade panel (20) and said fixing element (25, 35) by deformation, **characterised in that** the insert portion (11) is formed by a hollow cylinder body (29), along the outer circumference of which webs (9), which are spaced apart from each other, extend radially outwards, and are parallel to the centre line of said hollow cylinder body, are integrally formed, and **in that** said hollow cylinder body (29) has a flange-like portion (40) at one end, the outside diameter of which is essentially in line with the free ends of the radially extending webs (9).

2. The mounting element according to claim 1, **characterised in that** said flange-like portion (40) has a truncated-cone-like portion (41) at its end.

3. The mounting element according to claim 1 or claim 2, **characterised in that** said insert portion (11) is integrally formed with a sealing lip (45), which seals off said fixing hole (21) of said façade panel (20) after mounting said fixing element (25, 35) against humidity penetrating from the outside.

4. The mounting element according to claim 2 and claim 3, **characterised in that** said sealing lip (45) is formed by an annular extension of the section of the flange-like portion (40), the outside diameter (D2) of which is larger than the diameter of said fixing holes (21).

5. The mounting element according to claim 3 or claim 4, **characterised in that** said flange-like portion (40) has a truncated-cone-like bearing surface (46) extending towards the centre line in the area of the through hole opening (17).

6. The mounting element according to any one of the preceding claims, **characterised in that** it is integrally formed of an elastic plastic.

## Revendications

1. Élément de montage pour une plaque de façade (20) avec des trous de montage (21), ledit élément de montage (1,2) étant formé par une douille de compensation (3), ladite douille de compensation (3) comprenant une partie d'introduction (11) et ayant un trou de passage (17) pour recevoir un élément de fixation (25, 35) sensiblement sans jeu, et ladite douille de compensation (3) étant constituée d'une matière élastique, qui, en se déformant, absorbe le mouvement relatif entre ladite plaque de façade (20) et ledit élément de montage (25, 35), **caractérisé en ce que** ladite partie d'introduction (11) est constituée par un corps en forme de cylindre creux (29), suivant la périphérie extérieure duquel des âmes (9) sont formées, écartées l'une de l'autre, s'étendant radialement vers l'extérieur et parallèlement à l'axe central du cylindre creux, et **en ce que** ledit corps en forme de cylindre creux (29) a une partie de type collerette (40) à un bout, le diamètre extérieur de laquelle est sensiblement aligné avec les bouts libres desdits âmes (9) s'étendant radialement.

2. Élément de montage selon la revendication 1, **caractérisé en ce que** ladite partie du type collerette (40) a une partie tronconique (41) à son bout.

3. Élément de montage selon la revendication 1 ou 2, **caractérisé en ce que** une lèvre d'étanchéité (45) est formée à ladite partie d'introduction (11), ladite lèvre d'étanchéité (45) rendant étanche contre humidité pénétrant de l'extérieur ledit trou de montage (21) de ladite plaque de façade (20) après le montage dudit élément de fixation (25, 35).

4. Élément de montage selon la revendication 2 et 3, **caractérisé en ce que** ladite lèvre d'étanchéité (45) est constituée par une extension en forme d'anneau de la section de ladite partie de type collerette (40), le diamètre extérieur (D2) de laquelle étant plus large que le diamètre desdits trous de montage (21).

5. Élément de montage selon la revendication 3 ou 4, **caractérisé en ce que** ladite partie de type collerette (40) a une surface de support (46) tronconique qui s'étend vers la direction de l'axe central dans la région dudit trou de passage (17).

6. Élément de montage selon l'une des revendications précédentes, **caractérisé en ce que** ledit élément de montage est fait en une seule pièce et est constitué d'un matière plastique élastique.
